# EUROPÄISCHE PATENTSCHRIFT

(11) **EP 0 999 963 B1**
(45) Veröffentlichungstag und Bekanntmachung des Hinweises auf die Patenterteilung: **02.05.2002**
(21) Anmeldenummer: 98946276.7
(22) Anmeldetag: 04.08.1998
(51) Int. Cl.: B60T 13/567

(54) **ANORDNUNG ZUR BEFESTIGUNG EINES BREMSKRAFTVERSTÄRKERS**
DEVICE FOR FIXING A POWER BRAKE
DISPOSITIF DE FIXATION D'UN FREIN ASSISTE

(30) Priorität: 08.08.1997 DE 19734290
(43) Veröffentlichungstag der Anmeldung: 17.05.2000
(73) Patentinhaber: Continental Teves AG & Co. oHG, 60488 Frankfurt am Main (DE)
(72) Erfinder: JAKOBI, Ralf, D-65439 Flörsheim (DE); WAGNER, Wilfried, D-35625 Hüttenberg (DE); FALLER, Jürgen, D-63796 Kahl (DE)
(86) Internationale Anmeldenummer: EP9804856
(87) Internationale Veröffentlichungsnummer: WO9907590

(56) Entgegenhaltungen:
- EP-A- 0 371 831
- DE-A- 3 203 495
- DE-A- 3 803 958
- US-A- 4 567 728

## Beschreibung

Die Erfindung betrifft eine Anordnung zur Befestigung eines durch eine Druckstange betätigbaren Bremskraftverstärkers an der Spritzwand eines Kraftfahrzeuges mittels eines Adapters, wobei zwischen dem Adapter und der Spritzwand ein Dichtelement vorgesehen ist, das gleichzeitig an der Druckstange radial dichtend anliegt.

Eine derartige Befestigungsanordnung ist z. B. aus der DE 38 03 958 A1 bekannt. Der Adapter der vorbekannten Befestigungsanordnung umschließt teilweise das Gehäuse des Bremskraftverstärkers und die der Abdichtung dienende Schutzkappe weist zwei radiale Befestigungsbereiche auf, die nach der Montage des Bremskraftverstärkers zwischen dem Adapter und der Spritzwand eingeklemmt sind. Der Adapter weist vorzugsweise einen Belüftungsdurchgang auf, der ein Ansaugen der für eine einwandfreie Funktion des Bremskraftverstärkers benötigten Luft aus dem Motorraum des Fahrzeuges ermöglicht.

Als nachteilig anzusehen ist jedoch die Gefahr, daß bei der Montage die Schutzkappe verrutscht, so daß die gewünschte Dichtwirkung zwischen dem Adapter und der Spritzwand beeinträchtigt wird.

Es ist daher Aufgabe der vorliegenden Erfindung eine Anordnung zur Befestigung eines Bremskraftverstärkers der eingangs genannten Gattung vorzuschlagen, die eine genaue Positionierung des Dichtelementes bei der Montage und somit eine zuverlässige Abdichtung des Adapters gegenüber der Spritzwand ermöglicht.

Diese Aufgabe wird erfindungsgemäß durch eine Anordnung mit den Merkmalen des Anspruchs 1 gelöst.

Die Abdichtung wird bei einer vorteilhaften Weiterbildung des Erfindungsgegenstandes durch einen Faltenbalg gebildet. Diese Maßnahme ermöglicht einen Ersatz von bisher verwendeten, hoch verdichteten Filterelementen, die im Steuergehäuse des Bremskraftverstärkers zur Geräuschdämmung vorgesehen waren, durch einfache Filterelemente, die lediglich der Staubfilterung dienen. Dadurch werden die Ansprechzeiten des Bremskraftverstärkers erheblich verkürzt. Die Filterelemente können vorzugsweise zwischen dem in den Innenraum des Adapters hineinragenden Teil des Verstärkergehäuses und der Innenwand des Adapters angeordnet sein.

Eine besonders vorteilhafte Ausgestaltung des Erfindungsgegenstandes sieht vor, daß der Faltenbalg zwei symmetrisch gegenüberliegend ausgebildete radiale Befestigungsbereiche aufweist, die mit am Adapter angebrachten Befestigungselementen zusammenwirken. Diese Maßnahme ermöglicht ein wirksames Halten des Faltenbalges beim Transport, sowie eine zusätzliche Abdichtung im Bereich der Befestigungselemente.

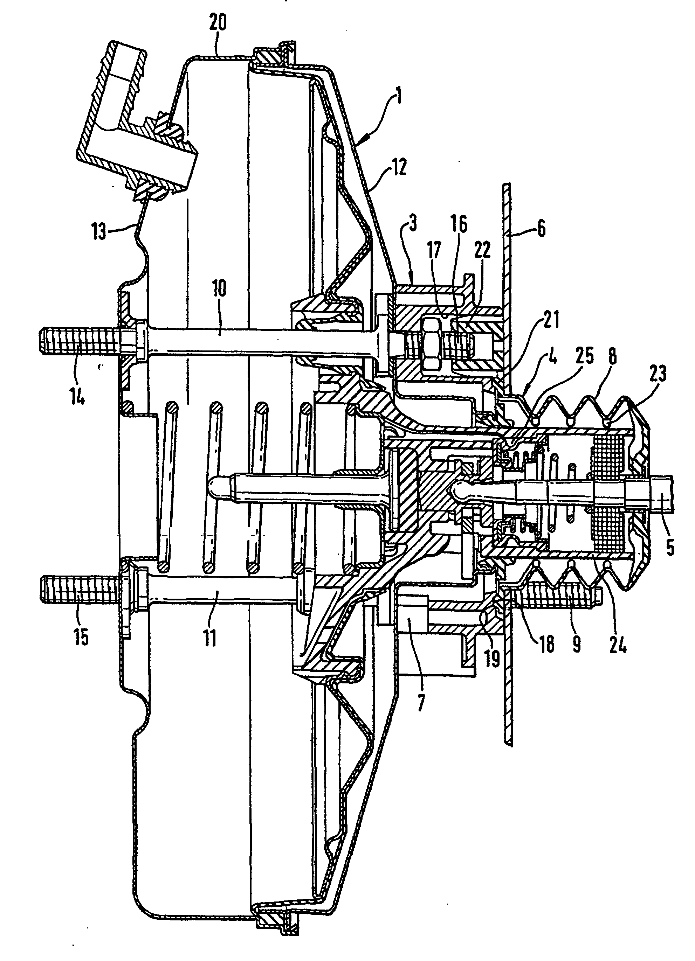

Weitere Einzelheiten und Vorteile der erfindungsgemäßen Befestigungsvorrichtung ergeben sich aus den Unteransprüchen sowie aus der Beschreibung eines Ausführungsbeispiels der Erfindung, das nachfolgend anhand der beiliegenden Zeichnung näher erläutert ist, dessen einzige Figur eine Ausführungsform der erfindungsgemäßen Befestigungsanordnung im Längsschnitt zeigt.

Bei der in der Zeichnung dargestellten Ausführungsform der Erfindung ist ein Bremskraftverstärker 1 an einer lediglich schematisch angedeuteten Spritzwand 6 eines nicht dargestellten Kraftfahrzeuges unter Zwischenschaltung eines Adapters 3 befestigt, an dessen in der Zeichnung linker Seite der Bremskraftverstärker 1 angebracht ist. Der einen Belüftungsdurchgang 7 aufweisende Adapter 3 ist an seiner der Spritzwand 6 zugewandten Seite mit zwei gegenüberliegend angeordneten Schraubbolzen versehen, die durch entsprechend ausgebildete Öffnungen in der Spritzwand 6 hindurchgehen und mit nicht gezeigten Schraubmuttern zusammenwirken. Der in der Zeichnung gezeigte Schraubbolzen trägt das Bezugszeichen 9. Der ein schnelles Belüften des Bremskraftverstärkers 1 ermöglichende Belüftungsdurchgang 7 ist bei dieser Ausführung durch eine in der Adapterwand ausgebildete radiale Ausnehmung gebildet. Zwischen der Spritzwand 6 und dem Adapter 3 ist eine Abdichtung 4 vorgesehen, die bei dem dargestellten Ausführungsbeispiel als Faltenbalg 8 ausgebildet ist. Durch das dem Adapter 3 abgewandte Ende des Faltenbalges 8 ist eine Druckstange 5 hindurchgeführt, die, gekoppelt mit einem nicht dargestellten Bremspedal, der Betätigung des Bremskraftverstärkers 1 dient. Außerdem weist der Faltenbalg 8 in seinem Inneren mehrere radiale Noppen 23 oder Stege auf, die an einem ein Steuerventil 25 des Bremskraftverstärkers 1 aufnehmenden Steuergehäuse 24 anliegen.

Der Befestigung des Bremskraftverstärkers 1 am Adapter 3 dienen zwei stabförmige Verbindungsbolzen 10, 11, die parallel zur Bremskraftverstärker-Längsachse so angeordnet sind, daß sie ein Verstärkergehäuse 20 bildende Gehäusehälften 12, 13 miteinander verbinden. An den in der Zeichnung links dargestellten Enden der Verbindungsbolzen 10, 11 sind erste Befestigungselemente 14, 15 ausgebildet, die der Befestigung eines dem Bremskraftverstärker 1 nachgeschalteten nicht gezeigten Hauptbremszylinder dienen. An den in der Zeichnung rechts dargestellten Enden der Verbindungsbolzen 10, 11 sind zweite Befestigungselemente 16 ausgebildet, die der Befestigung des Verstärkergehäuses 20 am Adapter 3 dienen und die von im Adapter 3 ausgebildeten zylindrischen Ausnehmungen 17 aufgenommen werden.

Außerdem ist der Zeichnung zu entnehmen, daß der Faltenbalg 8 an seinem dem Adapter 3 zugewandten Ende einen radialen Kragen 21 aufweist, an dessen der Spritzwand 6 abgewandter Seite ein Ringwulst 18 ausgebildet ist, der von einer im Adapter ausgebildeten Ringnut 19 aufgenommen wird. Von dem Kragen 21 stehen zwei nicht gezeigte,radial gegenüberliegend angeordnete Befestigungslaschen ab, die mit Durchtrittsöffnungen für die Schraubbolzen 9, - versehen sind. Außerdem sind am Umfang des Kragens 21, gegenüber den Befestigungslaschen vorzugsweise um 90° versetzt, axial sich in Richtung auf den Bremskraftverstärker 1 zu erstreckende Führungsbuchsen 22 angeformt, deren Außendurchmesser dem Durchmesser der vorhin erwähnten Ausnehmungen 17 entspricht und die im montierten Zustand des Bremskraftverstärkers 1 auf die dem Adapter 3 zugeordneten Befestigungselemente 16 aufgeschoben werden.

### Bezugszeichenliste

- 1: Bremskraftverstärker
- 2: Verstärkergehäuse
- 3: Adapter
- 4: Abdichtung
- 5: Druckstange
- 6: Spritzwand
- 7: Belüftungsdurchgang
- 8: Faltenbalg
- 9: Schraubbolzen
- 10: Verbindungsbolzen
- 11: Verbindungsbolzen
- 12: Gehäusehälfte
- 13: Gehäusehälfte
- 14: Befestigungselement
- 15: Befestigungselement
- 16: Befestigungselement
- 17: Ausnehmung
- 18: Ringwulst
- 19: Radialnut
- 20: Verstärkergehäuse
- 21: Kragen
- 22: Führungsbuchse
- 23: Noppen
- 24: Steuergehäuse
- 25: Steuerventil

## Patentansprüche

1. Anordnung zur Befestigung eines durch eine Druckstange (5) betätigbaren Bremskraftverstarkers an der Spritzwand (6) eines Kraftfahrzeuges mittels eines Adapters (3), wobei zwischen dem Adapter (3) und der Spritzwand (6) ein Dichtelement (4) vorgesehen ist, das gleichzeitig an der Druckstange (5) radial dichtend anliegt, wobei mindestens ein Befestigungselement (16) zur Befestigung des Bremskraftverstärkers am Adapter (3) und ferner am Adapter (3) eine zugeordnete Ausnehmung (17) zur Aufnahme des Befestigungselementes (16) vorgesehen sind, **dadurch gekennzeichnet, daß** das Dichtelement (4) mindestens eine Führungsbuchse (22) aufweist, die auf das Befestigungselement (16) aufschiebbar ist.

2. Anordnung nach Anspruch 1, **dadurch gekennzeichnet, daß** das Befestigungselement (16) an einem ersten Ende eines Gehäusehälften (12,13) verbindenden Verbindungsbolzens (10,11) angeordnet ist, und zur Befestigung des Bremskraftverstärkers an dem Adapter (3) dient, und daß der Verbindungsbolzen (10,11) ein zweites Ende mit Befestigungselementen (14,15) aufweist, welches zur Befestigung eines nachgeschalteten Hauptbremszylinders an das Verstärkergehäuse (20) vorgesehen ist.

3. Anordnung nach Anspruch 1, **dadurch gekennzeichnet, daß** das Dichtelement (4) durch einen Faltenbalg (8) gebildet ist, in dessen radialem Randbereich bzw. Kragen (21) die Führungsbuchse (22) angeordnet ist.

4. Anordnung nach Anspruch 3, **dadurch gekennzeichnet, daß** der Faltenbalg (8) einen radial umlaufenden Ringwulst (18) aufweist, der in eine radial umlaufende Ringnut (19) des Adapters (3) einlegbar ist.

5. Anordnung nach einem der Ansprüche 1 bis 4, **dadurch gekennzeichnet, daß** der Faltenbalg (8) zwei, gegenüberliegend ausgebildete radiale Befestigungslaschen aufweist, die mit am Adapter (3) angebrachten Befestigungselementen bzw. Schraubbolzen (9) zusammenwirken.

6. Anordnung nach einem der vorhergehenden Ansprüche 1 bis 5, **dadurch gekennzeichnet, daß** der Faltenbalg (8) in seinem Inneren mehrere radiale Noppen (23) oder Stege aufweist, die an einem ein Steuerventil des Bremskraftverstärkers (1) aufnehmenden Steuergehäuse (24) anliegen.

## Claims

1. Arrangement for attaching a brake force booster, that is operable by a push rod (5), to the splashboard (6) of an automotive vehicle by means of an adapter (3), wherein a sealing element (4) is interposed between the adapter (3) and the splashboard (6) which additionally is in a radially sealing abutment with the push rod (5), wherein there is provision of at least one attaching element (16) for attaching the brake force booster to the adapter (3) and, further, a mating recess (17) on the adapter (3) for accommodating the attaching element (16),
**characterized in that** the sealing element (4) has at least one guide bush (22) which is adapted to be slipped on the attaching element (16).

2. Arrangement as claimed in claim 1,
**characterized in that** the attaching element (16) is arranged on a first end of a connecting pin (10,11) which interconnects housing halves (12,13), and is used to attach the brake force booster to the adapter (3), and **in that** the connecting pin (10,11) has a second end with attaching elements (14,15) which is provided for attaching a downstream-connected master brake cylinder to the booster housing (20).

3. Arrangement as claimed in claim 1,
**characterized in that** the sealing element (4) is provided by a pleated bellows (8), and the guide bush (22) is arranged in the radial fringe area or collar (21) thereof.

4. Arrangement as claimed in claim 3,
**characterized in that** the pleated bellows (8) has a radially circumferential annular bead (18) which is adapted to be placed into a radially circumferential annular groove (19) of the adapter (3).

5. Arrangement as claimed in any one of claims 1 to 4,
**characterized in that** the pleated bellows (8) has two oppositely arranged radial attaching lugs which cooperate with attaching elements or screw bolts (9) fitted to the adapter (3).

6. Arrangement as claimed in any one of the preceding claims 1 to 5,
**characterized in that** the pleated bellows (8) has in its interior a plurality of radial knubs (23) or webs which bear against a control housing (24) that accommodates a control valve of the brake force booster (1).

## Revendications

1. Dispositif de fixation d'un servofrein, à actionner au moyen d'une barre de compression (5), à l'auvent (6) d'un véhicule automobile, au moyen d'un adaptateur (3), entre l'adaptateur (3) et l'auvent (6) étant prévu un élément d'étanchéité (4) qui s'applique en même temps radialement, de manière étanche, contre la barre de compression (5), tandis que sont prévus au moins un élément de fixation (16) pour la fixation du servofrein à l'adaptateur (3) et en outre, sur l'adaptateur (3), un évidement (17) associé pour recevoir l'élément de fixation (16), **caractérisé en ce que** l'élément d'étanchéité (4) comporte au moins une douille de guidage (22) qui peut être enfilée sur l'élément de fixation (16).

2. Dispositif selon la revendication 1, **caractérisé en ce que** l'élément de fixation (16) est disposé sur une première extrémité d'un axe de liaison (10, 11), reliant des moitiés de boîtier (12, 13), et sert à la fixation du servofrein à l'adaptateur (3), et **en ce que** l'axe de liaison (10, 11) comporte une deuxième extrémité avec des éléments de fixation (14, 15), qui est prévue pour la fixation au boîtier de servofrein (20), d'un cylindre de freinage principal monté derrière.

3. Dispositif selon la revendication 1, **caractérisé en ce que** l'élément d'étanchéité (4) est formé par un soufflet (8) dans la zone de bordure radiale ou collerette (21) duquel est disposée la douille de guidage (22).

4. Dispositif selon la revendication 3, **caractérisé en ce que** le soufflet (8) présente un bourrelet annulaire (18) périphérique radialement qui peut être placé dans une rainure annulaire (19) périphérique radialement de l'adaptateur (3).

5. Dispositif selon l'une des revendications 1 à 4, **caractérisé en ce que** le soufflet (8) comporte deux pattes de fixation radiales, réalisées en vis-à-vis, qui coopèrent avec des éléments de fixation ou boulons (9) placés sur l'adaptateur (3).

6. Dispositif selon l'une des revendications 1 à 5 précédentes, **caractérisé en ce que** le soufflet (8) comporte à l'intérieur plusieurs boutons (23) radiaux ou nervures qui s'appliquent contre un boîtier de commande (24) qui reçoit une soupape de commande du servofrein (1).
